# EUROPEAN PATENT APPLICATION

(11) **EP 3 564 848 A1**
(43) Date of publication of application: **06.11.2019**
(21) Application number: 18170616.9
(22) Date of filing: 03.05.2018
(51) Int. Cl.: G06K 9/00, G06K 9/20, G06K 9/03

(54) **FINGERPRINT SENSING DEVICE AND CALIBRATION METHOD**

(71) Applicant: NXP B.V., 5656 AG Eindhoven (NL)
(72) Inventor: Routray, Dillip Kumar, 5656 AG Eindhoven (NL); Suwald, Thomas, 5656 AG Eindhoven (NL); Eckhoff, Andy, 5656 AG Eindhoven (NL)
(74) Representative: Krott, Michel

(57) **Abstract**

In accordance with a first aspect of the present disclosure, a method of calibrating a fingerprint sensing device is conceived, the method comprising: measuring a first charge, the first charge being present on an array of reference capacitors; converting the measured charge to a digital value; comparing the digital value to a range of predefined values; if the digital value does not fall within said range, adjusting one or more parameters of a readout circuit of said fingerprint sensing device, wherein said readout circuit is configured to measure a second charge, the second charge being present on an array of capacitive sensor elements. Further aspects relate to a corresponding fingerprint sensing device and to an alternative method of calibrating a fingerprint sensing device.

## Description

### OVERVIEW

The present disclosure relates to a method of calibrating a fingerprint sensing device. Furthermore, the present disclosure relates to a corresponding fingerprint sensing device. Fingerprint sensing devices, such as capacitive fingerprint sensors, may be integrated into resource-constrained devices, for example into smart cards, wearable devices, Internet of Things (IoT) devices, or smart grid devices. Process, voltage and temperature (PVT) induced variations may represent challenges in such fingerprint sensing devices.

### SUMMARY

In accordance with a first aspect of the present disclosure, a method of calibrating a fingerprint sensing device is conceived, the method comprising: measuring a first charge, the first charge being present on an array of reference capacitors; converting the measured charge to a digital value; comparing the digital value to a range of predefined values; if the digital value does not fall within said range, adjusting one or more parameters of a readout circuit of said fingerprint sensing device, wherein said readout circuit is configured to measure a second charge, the second charge being present on an array of capacitive sensor elements.

In an embodiment, the parameters comprise gain control settings.

In an embodiment, the parameters are parameters of at least one amplifying stage.

In an embodiment, the predefined values correspond to received measurement signals having an acceptable signal-to-noise ratio (SNR).

In an embodiment, the steps of comparing and adjusting are performed by control logic comprised in the fingerprint sensing device.

In an embodiment, the first charge is measured by the readout circuit.

In an embodiment, the first charge is measured by a further readout circuit.

In accordance with a second aspect of the present disclosure, a method of calibrating a fingerprint sensing device is conceived, the method comprising: measuring a first charge, the first charge being present on a subset of an array of capacitive sensor elements; converting the measured charge to a digital value; generating a histogram based on the digital value; deriving one or more fingerprint image quality parameters from said histogram; if said fingerprint image quality parameters do not fall within a predefined range, adjusting one or more parameters of a readout circuit of said fingerprint sensing device, wherein said readout circuit is configured to measure a second charge, the second charge being present on said array of capacitive sensor elements.

In accordance with a third aspect of the present disclosure, a fingerprint sensing device is provided, the device comprising: a first readout circuit configured to measure a first charge, the first charge being present on an array of reference capacitors; an analog-to-digital converter (ADC) configured to convert the measured charge to a digital value; control logic configured to compare the digital value to a range of predefined values; wherein said control logic is further configured to adjust, if the digital value does not fall within said range, one or more parameters of a second readout circuit of said fingerprint sensing device, wherein said second readout circuit is configured to measure a second charge, the second charge being present on an array of capacitive sensor elements.

In an embodiment, the parameters comprise gain control settings.

In an embodiment, the parameters are parameters of at least one amplifying stage.

In an embodiment, the array of reference capacitors is arranged as a row of capacitors.

In an embodiment, the first readout circuit is the same as the second readout circuit.

In an embodiment, the first readout circuit and the second readout circuit are separate circuits.

In an embodiment, a smart card, internet-of-things (IoT) device, wearable device or smart grid device comprises a device of the kind set forth.

### DESCRIPTION OF DRAWINGS

Embodiments will be described in more detail with reference to the appended drawings, in which:
Fig. 1 shows an illustrative embodiment of a method of calibrating a fingerprint sensing device;
Fig. 2A shows an example of a fingerprint sensing device;
Fig. 2B shows an illustrative embodiment of a fingerprint sensing device;
Fig. 3 shows an illustrative embodiment of a calibration pixel row;
Fig. 4A shows another illustrative embodiment of a fingerprint sensing device;
Fig. 4B shows a further illustrative embodiment of a fingerprint sensing device;
Fig. 4C shows a further illustrative embodiment of a fingerprint sensing device;
Fig. 5 shows an illustrative embodiment of switched capacitor amplifying stages;
Fig. 6 shows an illustrative embodiment of a calibration scan sequence;
Fig. 7A shows another illustrative embodiment of a method of calibrating a fingerprint sensing device;
Fig. 7B shows a further illustrative embodiment of a fingerprint sensing device;
Fig. 7C shows examples of regions of interest of a fingerprint image;
Fig. 7D shows another illustrative embodiment of a calibration scan sequence;
Fig. 8 shows an illustrative embodiment of a smart card.

### DESCRIPTION OF EMBODIMENTS

Fingerprint sensing devices, such as capacitive fingerprint sensors, may be integrated into resource-constrained devices, for example into smart cards, wearable devices, Internet of Things (IoT) devices, or smart grid devices. Process, voltage and temperature (PVT) induced variations may represent challenges in such fingerprint sensing devices. In particular, small sense capacitances typically have to be measured in such fingerprint sensing devices. This requires a high gain and a fine adjustment of references in the readout system. Such references of the readout system may for example be common mode inputs of amplifying stages of the readout system; these common mode inputs are often driven from internal reference circuits. As a consequence of the PVT-induced variations, it is often difficult to meet readout performance requirements, as prescribed by various technical specifications. Capacitive fingerprint measurement devices typically measure the capacitance between parts of a human body and an array of sensing electrodes (i.e. capacitive sensor elements). These devices may exhibit performance reductions related to histograms. More specifically, such performance reductions may result from measurement signals that are clipped inadvertently; clipping often occurs if the input voltage of a fingerprint sensor's analog-to-digital converter is outside of its operational conversion range. Furthermore, the signal-to-noise ratio (SNR) of the measurement signal or signals may be unacceptably low, due to the PVT-induced variations. These PVT-induced variations may be variations between different sensor dies or variations between components of a single sensor die (i.e. on-chip variations).

Now discussed are a method of calibrating a fingerprint sensing device and a corresponding fingerprint sensing device for reducing the above-mentioned performance reductions.

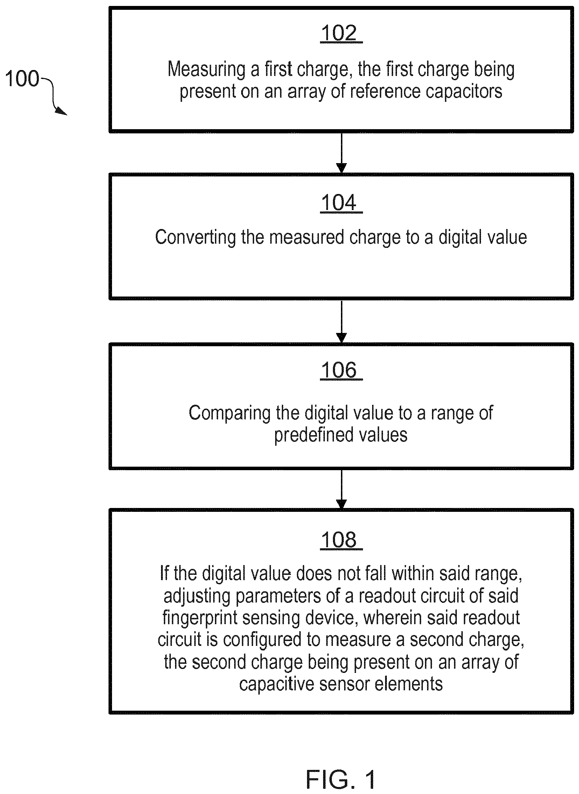

**Fig. 1** shows an illustrative embodiment of a method 100 of calibrating a fingerprint sensing device. The method 100 comprises, at 102, measuring a first charge, the first charge being present on an array of reference capacitors, wherein the charge may be representative for the capacitance of the capacitor holding said charge. In other words, a capacitance on said array of reference capacitors is measured. Furthermore, the method 100 comprises, at 104, converting the measured charge to a digital value, and at 106, comparing the digital value to a range of predefined values. Furthermore, the method 100 comprises, at 108, adjusting, if the digital value does not fall within said range, one or more parameters of a readout circuit of said fingerprint sensing device, wherein said readout circuit is configured to measure a second charge, the second charge being present on an array of capacitive sensor elements. The second charge is in other words representative for a capacitance that is present on said array of capacitive sensor elements. The method may calibrate the fingerprint sensing device before it is deployed. Normally, the PVT-induced performance reductions will only become apparent when the fingerprint sensing device is being used. At this stage, however, it is impractical to perform a calibration process. Therefore, in accordance with the present disclosure, an array of reference capacitors is provided, on which charges are present and that will represent typical capacitance values being similar to capacitance values exhibited by capacitive sensing elements when a finger couples with said sensing element. In other words, the reference capacitors represent a typical capacitance range as measured when sensing elements are touched by a finger. These reference capacitors are used for calibrating the fingerprint sensing device: the digitized measurement values can be compared to a range of predefined values (e.g. values reflecting measurements signals that have an acceptable signal-to-noise ratio) and, if they do not fall within said range, one or more parameters of the readout circuit are adjusted. This calibration loop may be repeated until the digitized measurement values of the reference capacitors fall within said range.

In an embodiment, the predefined values correspond to measurement signals having an acceptable signal-to-noise ratio (SNR). This may result in an effective, yet easy to implement, calibration process. Furthermore, in an embodiment, the adjusted parameters comprise gain control settings. In this way, the gain of the readout circuit can easily be tuned, which in turn may improve the performance of the fingerprint sensing device. In a practical and effective implementation, the array of reference capacitors is configured as a row of capacitors. In particular, this row of reference capacitors may be placed adjacent to the array of sensor elements. Furthermore, the array of sensor elements may be arranged as a matrix. In a practical and effective implementation, the steps of comparing 106 and adjusting 108 are performed by control logic comprised in the fingerprint sensing device. Furthermore, in an embodiment, the adjusted parameters are parameters of at least one amplifying stage, for example of at least one switched capacitor amplifying stage. Thereby, the fingerprint sensing device can easily be tuned or calibrated.

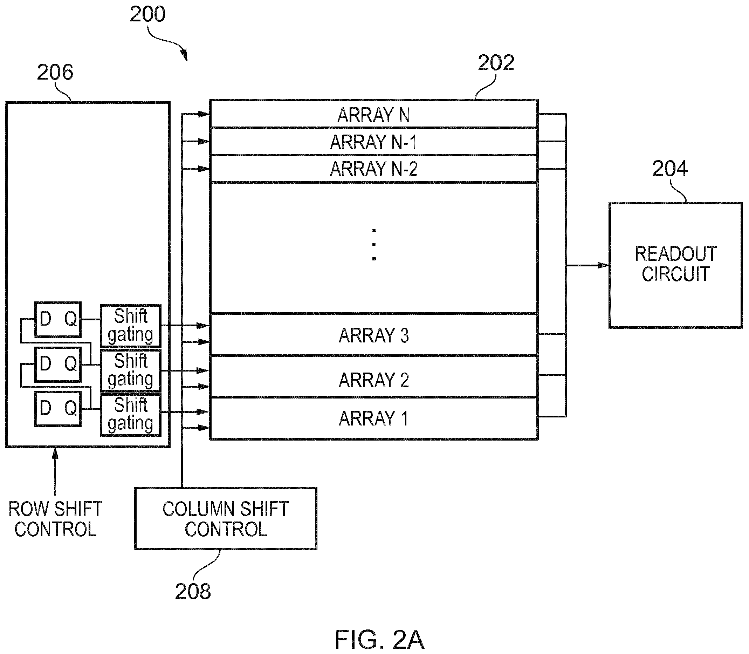

**Fig. 2A** shows an example of a fingerprint sensing device 200. The fingerprint sensing device 200 comprises an array 200 of capacitive sensor elements. The array comprises a plurality of rows (1 ... N) of sensor capacitors. Furthermore, the fingerprint sensing device 200 comprises a readout circuit 204 which is configured to measure a charge which is present on the sensor capacitors, wherein the measured charge may be indicative for the capacitance of the capacitors holding said charge. In some example embodiments, the charges present on the sensor capacitors are measured in a predefined order, under control of a row shift control unit 204 and a column shift control unit 208. The row shift control unit 204 and the column shift control unit 208 determine which sensor capacitor or capacitors of the array 202 are being measured at a certain moment in time. The measurement values obtained by the readout circuit 204 can be further processed by a processing unit (not shown), with the purpose of creating a fingerprint image that can be compared to a reference image. As mentioned above, the fingerprint sensing device 200 may suffer from PVT-induced performance reductions. More specifically, the conversion of sensor capacitances to digital values may be impacted by process and temperature variations. Furthermore, the increase or decrease in junction temperature impacts leakage through each pixel row (i.e. each row of sensor capacitors) and affects the sensed common readout output performance specifications and hence the converted digital output. These performance reductions will become apparent when the capacitive sensor elements are being used. Thus, it is impractical to perform a calibration process using these capacitive sensor elements.

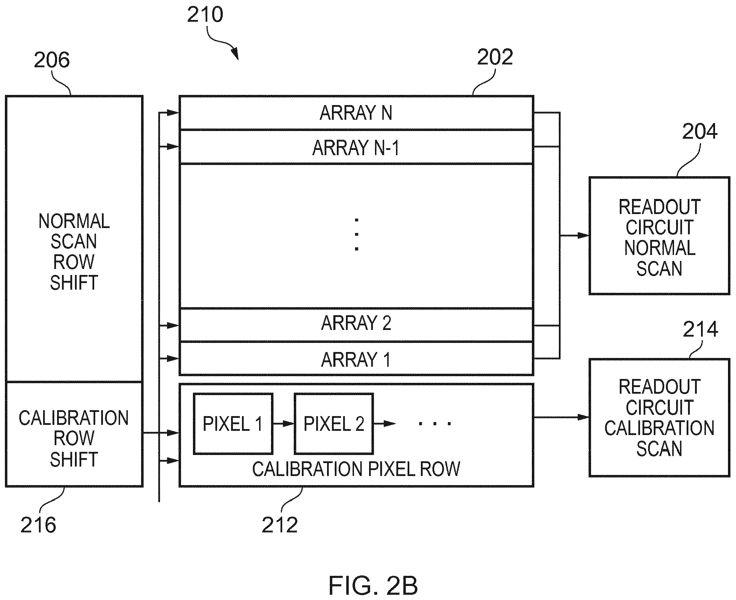

**Fig. 2B** shows an illustrative embodiment of a fingerprint sensing device 210. The fingerprint sensing device 210 comprises, in addition to the components already shown in Fig. 2A, a calibration pixel row 212, a readout circuit 214 for a calibration scan, and a calibration row shift control unit 216. In accordance with the present disclosure, an array of reference capacitors is used in a calibration process. An example of such an array is shown in Fig. 2B, and referred to as a calibration pixel row 212. Each pixel represents a reference capacitor. The readout circuit 214 is configured to measure the charge present on the reference capacitors, in a similar way as readout circuit 204 is configured to measure a charge on the sensor capacitors comprised in array 202. More specifically, Fig. 2B illustrates the arrangement of a calibration pixel row 212 and a readout circuit 214 associated with an array 202 of sensor capacitors. The calibration pixel row 212 has a known scaled capacitance, which generates a signal through the readout circuit 214 and which is converted through an ADC (not shown) for further processing through calibration control logic (not shown). Scaled refers in this context to a multiple of the actual measurement signals, which represent capacitances in the attofarad range, thus that the scaled measurement signals represent a multiple of said capacitances in the attofarad range as scaled measurement signals are beneficial for better processing. By using a scaled capacitance, a better resolution can be achieved when sampling the output of the readout circuit 214 by the ADC.

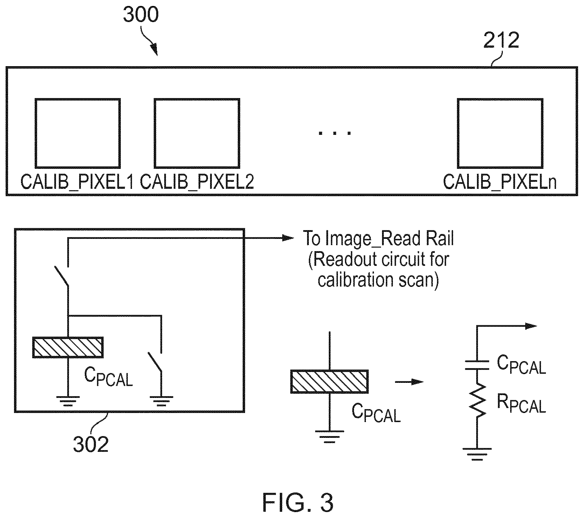

**Fig. 3** **shows** an illustrative embodiment of a calibration pixel row 300. In particular, it shows calibration pixels that represent reference capacitances, which are connected to the image read rail of the readout circuit. The capacitance C_{PCAL} represents the series combination of a known calibration reference scaled capacitor and an equivalent resistance R_{PCAL}. Thus, the capacitance C_{PCAL} represents a typical capacitance on the capacitive sensor elements. One end of each calibration pixel 302 is connected to the image read rail of the readout amplifier.

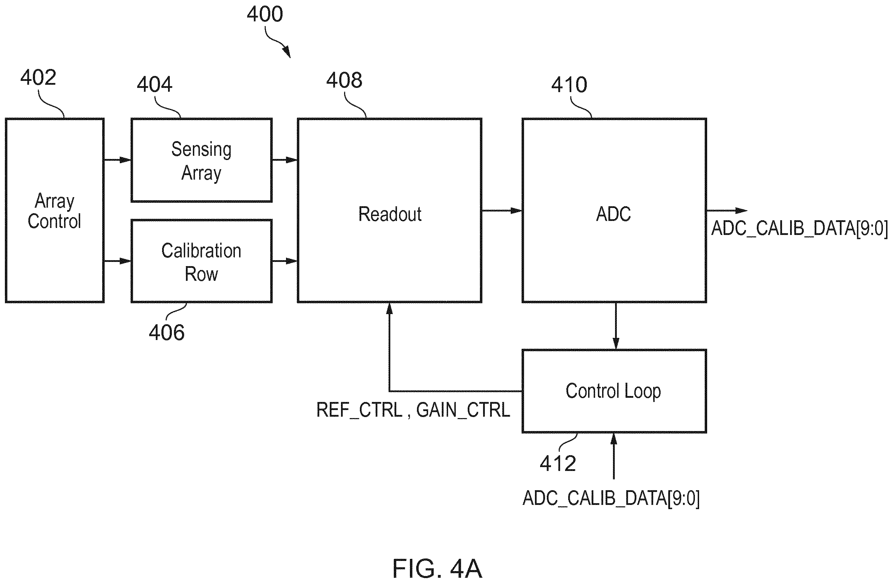

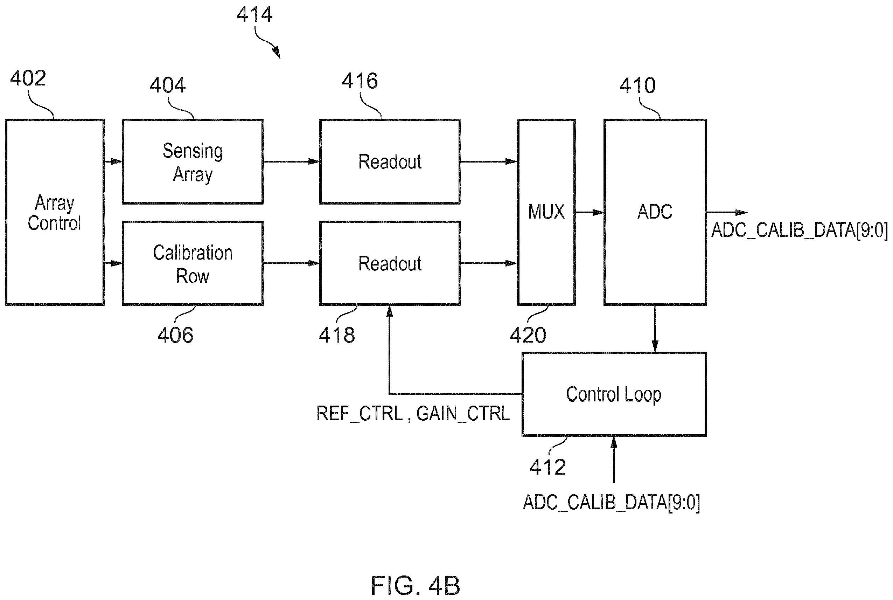

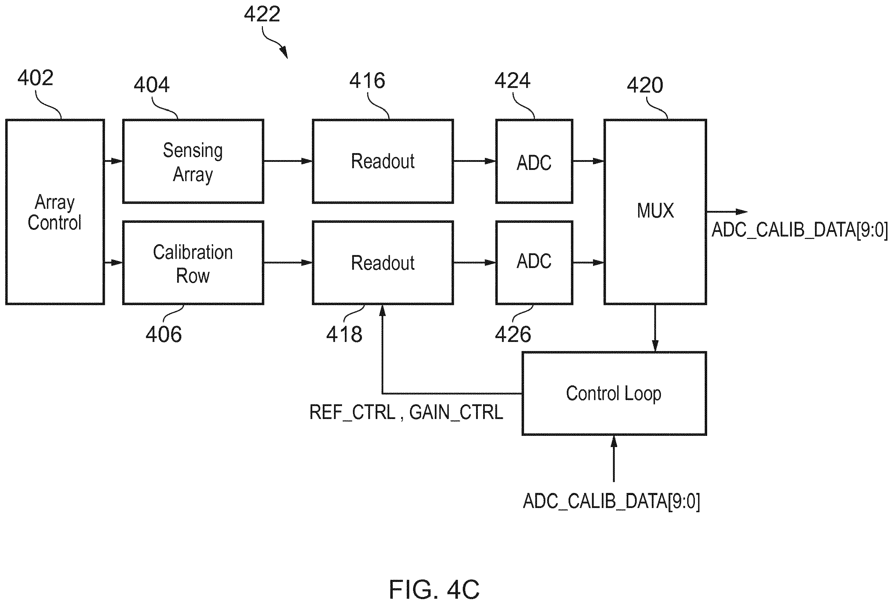

**Figs. 4A to 4C** show further illustrative embodiments of a fingerprint sensing device 400, 414, 422. The embodiment shown in Fig. 4A comprises an array control unit 402, a sensing array 404 (i.e. an array of sensing capacitors), a calibration row 406 (i.e. an array of reference capacitors), a readout circuit 408, an analog-to-digital converter (ADC) 410, and a calibration control loop 412 implemented by control logic. The ADC 410 may generate 10-bit data for known capacitances through the calibration pixel array 406, which is processed through a calibration control loop 412 to set the control registers and tune gain and reference settings for the readout circuit 408 for a given process corner and junction temperature. Fig. 4B shows that the readout circuit may be split into two independent components 416, 418, one for sensing array 404 and one for calibration row 406. In this example, the input data for the ADC 410 are multiplexed by a multiplexer 420, then converted by the ADC 410 and subsequently processed in the calibration control loop 412. Fig. 4C shows that the readout circuit may be split into two independent components 416, 418, one for sensing array 404 and one for calibration row 406, and that their output may be processed by two independent ADCs 424, 426. In this example, the outputs of the ADCs 412, 426 are multiplexed by multiplexer 420 and subsequently processed in the calibration control loop 412.

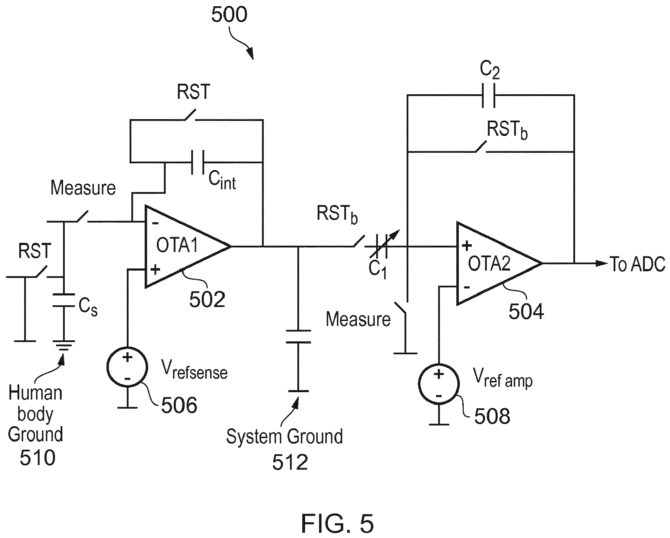

**Fig. 5** shows an illustrative embodiment of switched capacitor amplifying stages 500. The amplifier stages may be comprised in a readout circuit for measuring charges present on the array of capacitive sensor elements (not shown). The amplifier stages comprise operational transconductance amplifiers 502, reference voltage sources 506, 508. The amplifier stages 500 are connected to a human body ground 510 and a system ground 512. The voltage present on the voltage reference source 508 (V_{refamp}) is an example of a parameter that can be adjusted. The switched capacitor amplifying stages 500 may be connected to the image read rail as shown in Fig. 3. The stages 500 may be utilized to convert the capacitance (Cₛ) between a sense capacitor and the human body ground 510 into a voltage indicative of the capacitance; this voltage may be converted by an analog-to-digital converter (not shown) into a computer-readable representation of the measured capacitance. The switched capacitor amplifying stages 500 may also be utilized to convert the capacitance between a known scaled capacitance of a calibration row (Cₛ) and the system ground 512 into a voltage indicative of the capacitance; this voltage may again be converted by the analog-to-digital converter into a computer-readable representation of the measured capacitance. Primarily, the reference voltage V_{refamp} and other gain controls (e.g., the gain controls of other amplifying stages) may be adjusted through the calibration control loop to preserve the programmed dynamic range and optimal gray level of the image, which may be further processed by a feature extractor (not shown).

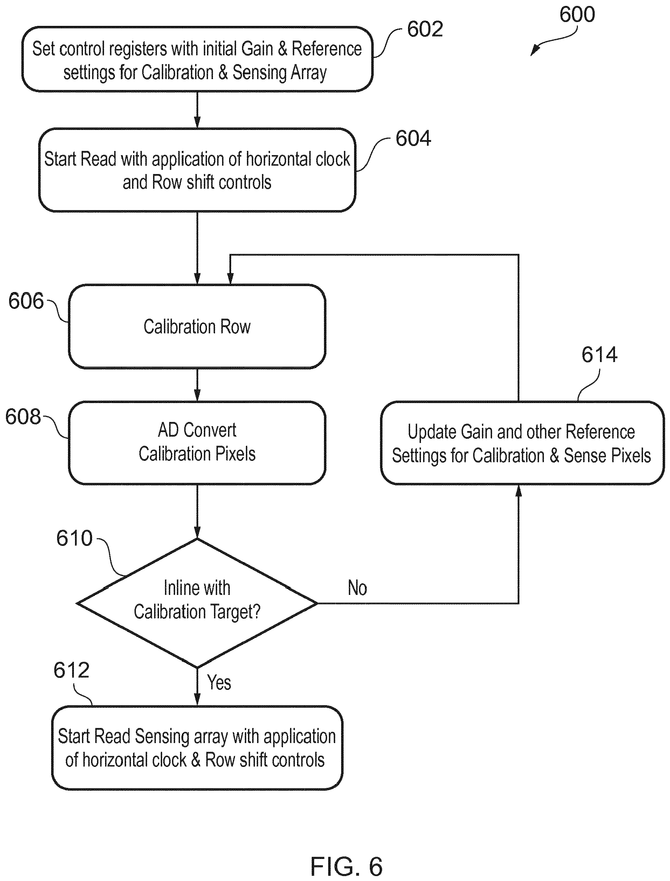

**Fig. 6** shows an illustrative embodiment of a calibration scan sequence 600. The sequence 600 comprises, at 602, setting control registers with initial gain and reference settings for the calibration and sensing array, at 604, starting a read with the application of a horizontal clock and row shift controls, at 606, reading the calibration row, at 608, an analog-to-digital conversion of calibration pixels, at 610, a check if the resulting digital value is in line with a calibration target, if so, at 612, starting a read with the application of the horizontal clock and row shift controls, and if not, at 614, updating gain and reference settings for calibration and sense pixels. More specifically, before the start of a normal matrix scan, the calibration scan may be initiated through the calibration row with the application of a horizontal clock, reset and measure phases of readout processing system. The ADC data may be captured through the calibration control logic to determine whether the data corresponds to the dynamic range for known values of scaled ridge/valley calibration capacitors comprised in the calibration row. The difference between the obtained calibration ADC mid-code with that for a programmed dynamic range for a typical corner may be the result of process, voltage and temperature variations, which have caused a mismatch. The control logic may correct the mismatch by adjusting the control bits of various references used by the readout circuit, until the mid-code and the obtained dynamic range correspond to a desired specification.

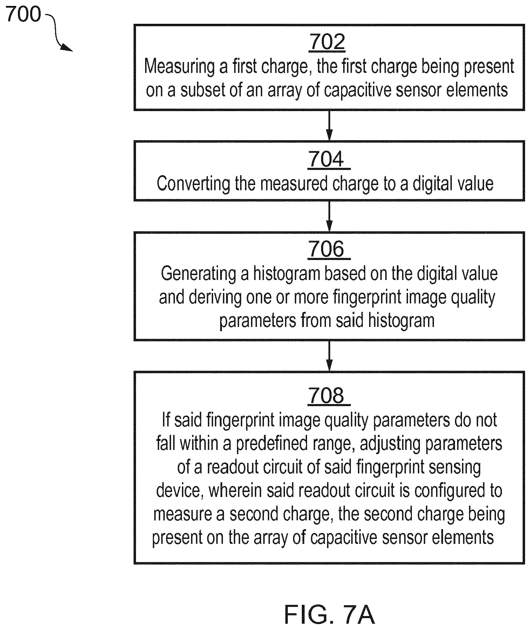

**Fig. 7A** shows another illustrative embodiment of a method 700 of calibrating a fingerprint sensing device. The method 700 comprises, at 702, measuring a first charge, the first charge being present on a subset of an array of capacitive sensor elements, at 704, converting the measured charge to a digital value, at 706, generating a histogram based on the digital value and deriving one or more fingerprint image quality parameters from said histogram, and at 708, if said fingerprint image quality parameters do not fall within a predefined range, adjusting one or more parameters of a readout circuit of said fingerprint sensing device, wherein said readout circuit is configured to measure a second charge, the second charge being present on said array of capacitive sensor elements. In particular, Fig. 7A shows an alternative embodiment in accordance with the present disclosure: instead of measuring the first charge on a separate array of reference capacitors, the first charge is measured on a subset of the array of capacitive sensor elements. The subset may for example comprise a subset of capacitive sensor elements that are located at typical regions of interest in a fingerprint image. By measuring the first charge on a subset of the capacitive sensor elements, it may still be feasible to perform a calibration process when the fingerprint sensing device is being used (i.e. touched by a finger). In that case, no additional array of reference capacitors may be necessary.

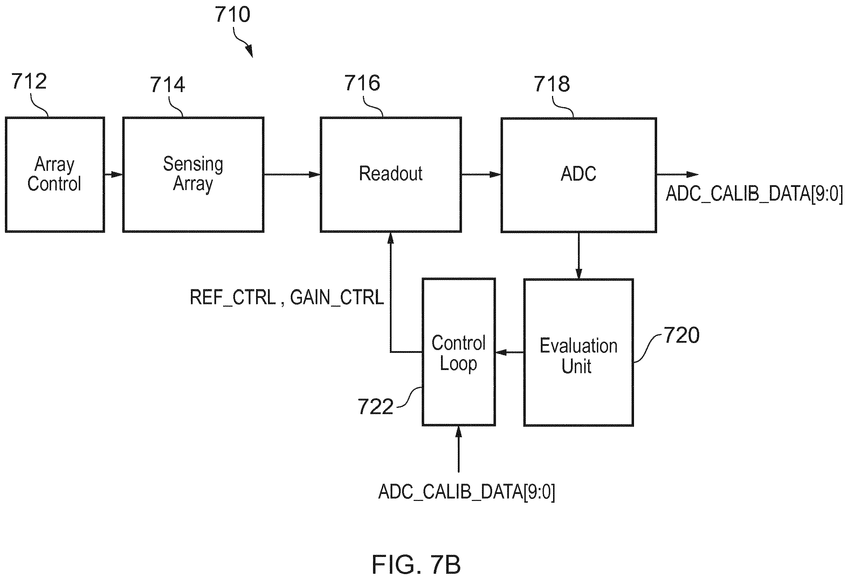

**Fig. 7B** shows a further illustrative embodiment of a fingerprint sensing device 710. In case a calibration row is not implemented in the fingerprint sensing device, the data of the sensing array can be utilized for calibration. An additional evaluation unit 720 may be provided to analyze the data. It may, for example, be embodied by an external microcontroller or by a logic block inside the fingerprint sensing device 710. In this embodiment, the converted pixel data from the ADC 718 are transmitted to the evaluation unit 720. The evaluation unit 720 analyzes the pixel data and extracts the calibration information. For fingerprint images, for example, a histogram of this pixel data is generated. The image quality as represented by image quality parameters, such as contrast and brightness, can be derived from this histogram and in case of an insufficient calibration the reference and gain controls can be adjusted accordingly.

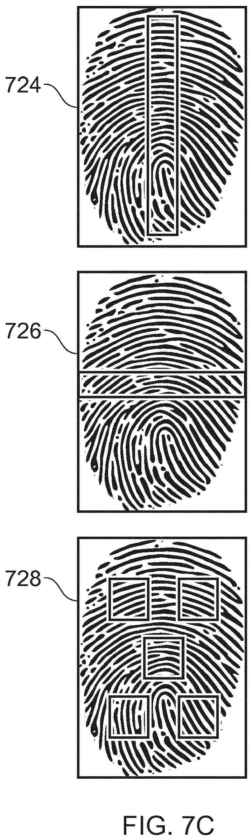

**Fig. 7C** shows examples of regions of interest 724, 726, 728 of a fingerprint image. To accelerate the procedure only parts of the sensing array, i.e. said regions of interest (ROI) 724, 726, 728 are used. These regions 724, 726, 728 should be defined according to their application. In case of fingerprint images, the ROIs 724, 726, 728 may be selected as shown in Fig. 7C. The approximation of a histogram which is determined from these ROIs 724, 726, 728 is accurate enough to estimate contrast and brightness.

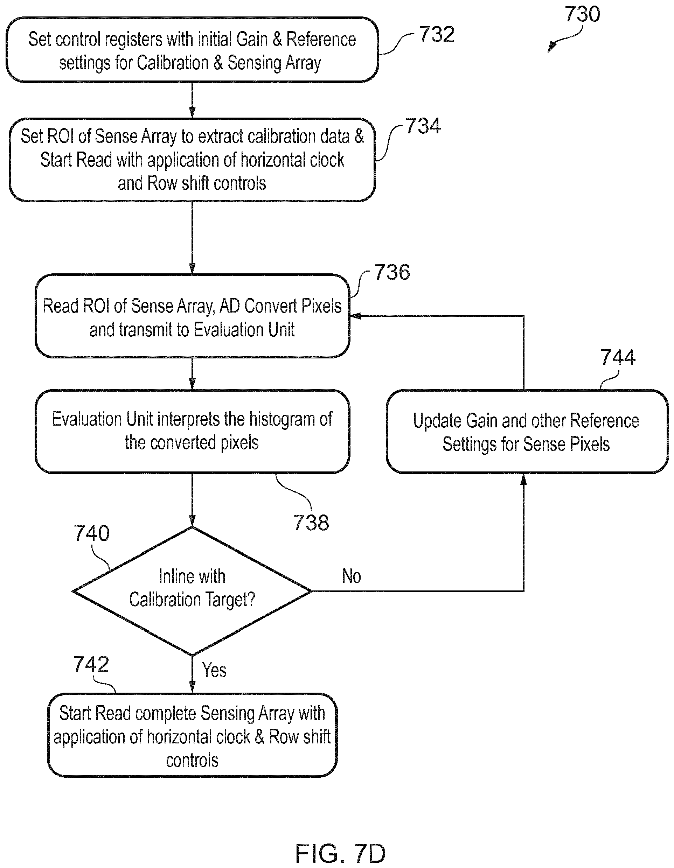

**Fig. 7D** shows another illustrative embodiment 730 of a calibration scan sequence. The sequence 730 comprises, at 732, setting control registers with initial gain and reference settings for the sensing array, at 734, setting regions of interest of the sensing array to extract calibration data and starting a read with the application of horizontal clock and row shift controls, at 736, reading the regions of interest of the sensing array, followed by an analog-to-digital conversion of pixels and a transmission of the digital data to the evaluation unit, at 738, interpreting by the evaluation unit the histogram of the converted pixels, at 740, a check if image quality parameters derived from the histogram by the evaluation unit are in line with calibration target, if so, at 742, starting a read of the complete sensing array with the application of horizontal clock and row shift controls, and if not, at 744, updating gain and other reference settings for the sense pixels.

The presently disclosed methods and devices may be used to advantage in a smart card, a wearable device, an Internet of Things (IoT) device, and a smart grid device.

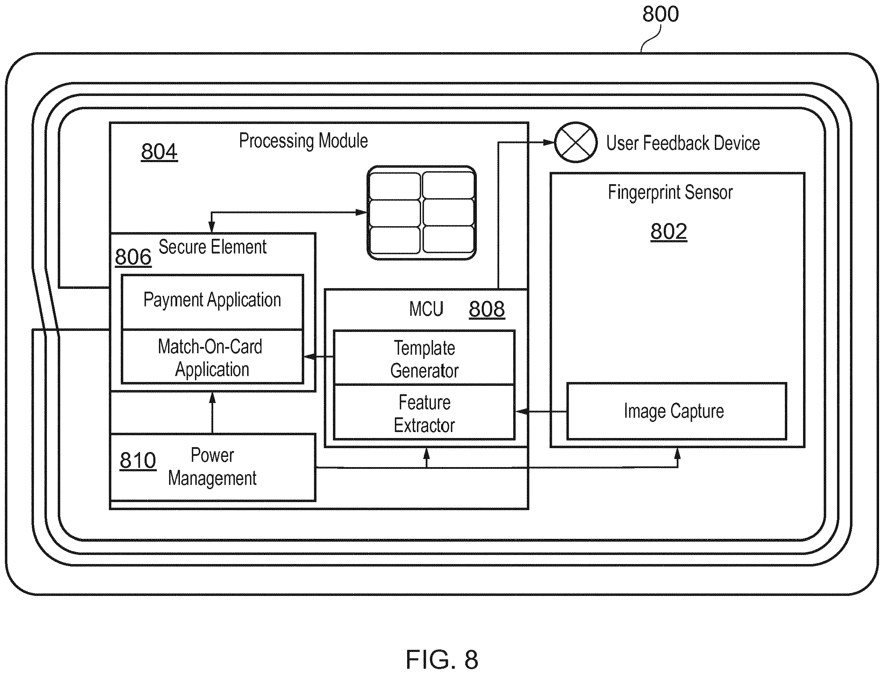

**Fig. 8** shows an illustrative embodiment of a smart card 800. The smart card 800 comprises a fingerprint sensor 802, which may be a fingerprint sensing device of the kind set forth herein. The fingerprint sensor 802 is embedded into a smart card 800 together with a processing module 804 that may perform different functions. The processing module 804 comprises a processing unit (i.e., microcontroller) 808, a secure element 806, and a power management unit 810. An image capture unit of the fingerprint sensor 802 is configured to capture a fingerprint image. The secure element 806 may execute a payment application requesting authentication from a fingerprint-match-on-card application, wherein said fingerprint-match-on card application communicates with the MCU 808 to obtain a fingerprint feature list for matching against a fingerprint reference feature list that is securely stored in the secure element 806. Note that "matching" is to be interpreted in a broad sense; thus, it is not necessary that the feature lists are identical, but that they both fall within a predefined range, for example. The MCU 808 communicates with the fingerprint sensor 802 in order to receive an electronic representation of a fingerprint pattern. The MCU 808 is further configured to process said electronic representation of a fingerprint pattern in order to extract features from said representation and converting them into said feature list in a machine-readable format. The MCU 808 may furthermore provide user feedback through a user feedback device, to guide the fingerprint imaging process. The secure element 806 may communicate through an ISO-7816 and/or ISO-14443 interface with a payment network and/or an identification network (not shown).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: method of calibrating a fingerprint sensing device
- 102: measuring a first charge, the first charge being present on an array of reference capacitors
- 104: converting the measured charge to a digital value
- 106: comparing the digital value to a range of predefined values
- 108: if the digital value does not fa
- 11: within said range, adjusting parameters of a readout circuit of said fingerprint sensing device, wherein said readout circuit is configured to measure a second charge, the second charge being present on an array of capacitive sensor elements
- 200: fingerprint sensing device
- 202: array of sensor elements
- 204: readout circuit
- 206: row shift control unit
- 208: column shift control unit
- 210: fingerprint sensing device
- 212: calibration pixel row
- 214: readout circuit calibration scan
- 216: calibration row shift
- 300: calibration pixel row
- 302: calibration pixel
- 400: fingerprint sensing device
- 402: array control unit
- 404: sensing array
- 406: calibration row
- 408: readout circuit
- 410: analog-to-digital converter
- 412: control loop
- 414: fingerprint sensing device
- 416: readout circuit
- 418: readout circuit
- 420: multiplexer
- 422: fingerprint sensing device
- 424: analog-to-digital converter
- 426: analog-to-digital converter
- 500: switched capacitor amplifying stages
- 502: operational transconductance amplifier
- 504: operational transconductance amplifier
- 506: reference voltage source
- 508: reference voltage source
- 510: human body ground
- 512: system ground
- 600: calibration scan sequence
- 602: set control registers with initial gain and reference settings for the calibration and sensing array
- 604: start read with application of horizontal clock and row shift controls
- 606: read calibration row
- 608: analog-to-digital conversion of calibration pixels
- 610: in line with calibration target?
- 612: start read with application of horizontal clock and row shift controls
- 614: update gain and reference settings for calibration and sense pixels
- 700: method of calibrating a fingerprint sensing device
- 702: measuring a first charge, the first charge being present on a subset of an array of capacitive sensor elements
- 704: converting the measured charge to a digital value
- 706: generating a histogram based on the digital value and deriving one or more fingerprint image quality parameters from said histogram
- 708: if said fingerprint image quality parameters do not fall within a predefined range, adjusting one or more parameters of a readout circuit of said fingerprint sensing device, wherein said readout circuit is configured to measure a second charge, the second charge being present on said array of capacitive sensor elements
- 710: fingerprint sensing device
- 712: array control unit
- 714: sensing array
- 716: readout circuit
- 718: analog-to-digital converter
- 720: evaluation unit
- 722: control loop
- 724: region of interest
- 726: region of interest
- 728: regions of interest
- 730: calibration scan sequence
- 732: set control registers with initial gain and reference settings for the sensing array
- 734: set regions of interest of the sensing array to extract calibration data and start read with application of horizontal clock and row shift controls
- 736: read regions of interest of the sensing array, analog-to-digital conversion of pixels and transmit to evaluation unit
- 738: evaluation unit interprets the histogram of the converted pixels
- 740: in line with calibration target?
- 742: start read of complete sensing array with application of horizontal clock and row shift controls
- 744: update gain and other reference settings for sense pixels
- 800: smart card
- 802: fingerprint sensor
- 804: processing module
- 806: secure element
- 808: microcontroller
- 810: power management unit

## Claims

1. A method of calibrating a fingerprint sensing device, comprising:
measuring a first charge, the first charge being present on an array of reference capacitors;
converting the measured charge to a digital value;
comparing the digital value to a range of predefined values;
if the digital value does not fall within said range, adjusting one or more parameters of a readout circuit of said fingerprint sensing device, wherein said readout circuit is configured to measure a second charge, the second charge being present on an array of capacitive sensor elements.

2. The method of claim 1, wherein the parameters comprise gain control settings.

3. The method of any preceding claim, wherein the parameters are parameters of at least one amplifying stage.

4. The method of any preceding claim, wherein the predefined values correspond to received measurement signals having an acceptable signal-to-noise ratio (SNR).

5. The method of any preceding claim, wherein the steps of comparing and adjusting are performed by control logic comprised in the fingerprint sensing device.

6. The method of any preceding claim, wherein the first charge is measured by the readout circuit.

7. The method of any one of claims 1 to 5, wherein the first charge is measured by a further readout circuit.

8. A method of calibrating a fingerprint sensing device, comprising:
measuring a first charge, the first charge being present on a subset of an array of capacitive sensor elements;
converting the measured charge to a digital value;
generating a histogram based on the digital value;
deriving one or more fingerprint image quality parameters from said histogram;
if said fingerprint image quality parameters do not fall within a predefined range, adjusting one or more parameters of a readout circuit of said fingerprint sensing device, wherein said readout circuit is configured to measure a second charge, the second charge being present on said array of capacitive sensor elements.

9. A fingerprint sensing device, comprising:
a first readout circuit configured to measure a first charge, the first charge being present on an array of reference capacitors;
an analog-to-digital converter (ADC) configured to convert the measured charge to a digital value;
control logic configured to compare the digital value to a range of predefined values;
wherein said control logic is further configured to adjust, if the digital value does not fall within said range, one or more parameters of a second readout circuit of said fingerprint sensing device, wherein said second readout circuit is configured to measure a second charge, the second charge being present on an array of capacitive sensor elements.

10. The device of claim 9, wherein the parameters comprise gain control settings.

11. The device of claim 9 or 10, wherein the parameters are parameters of at least one amplifying stage.

12. The device of any one of claims 9 to 11, wherein the array of reference capacitors is arranged as a row of capacitors.

13. The device of any one of claims 9 to 12, wherein the first readout circuit is the same as the second readout circuit.

14. The device of any one of claims 9 to 12, wherein the first readout circuit and the second readout circuit are separate circuits.

15. A smart card, internet-of-things (IoT) device, wearable device or smart grid device comprising the device of any one of claims 9 to 14.
